# EUROPEAN PATENT APPLICATION

(11) **EP 4 300 811 A1**
(43) Date of publication of application: **03.01.2024**
(21) Application number: 23182207.3
(22) Date of filing: 28.06.2023
(51) Int. Cl.: H02P 29/024, H02P 29/028, H02P 29/032, B25B 21/00, B25F 5/00

(54) **LOW VOLTAGE PROTECTIVE FEATURES IN POWER TOOLS**

(30) Priority: 29.06.2022 US 202217853473
(71) Applicant: Techtronic Cordless GP, Anderson, SC 29621 (US)
(72) Inventor: RENNER, Jeremy W., Anderson 29621 (US); HIDLE, Frederick B., Anderson, 29621 (US)
(74) Representative: Parker, Andrew James

(57) **Abstract**

Systems and methods for under-voltage protection features in power tools. One power tool provides a motor, a power source, a voltage sensor, and a controller. The power source is configured to selectively provide power to the motor. The voltage sensor is configured to sense a voltage of the power source. The controller is configured to monitor, with the voltage sensor, the voltage of the power source and reduce, when the voltage of the power source is less than or equal to a first threshold value, a current provided from the power source to the motor. The controller is configured to stop, when the voltage of the power source is less than or equal to a second threshold value, providing the current from the power source to the motor.

## Description

### FIELD

Embodiments described herein provide systems and methods for under-voltage protection features in power tools.

### SUMMARY

Power tools often have an under-voltage protection feature that shuts off the power tool when the system voltage reaches some threshold limit. However, when sudden voltage drops occur, power tools having this protection shut down without having the opportunity to recover.

Embodiments described herein provide for multiple voltage thresholds for different under-voltage protective operations. For example, when a first voltage threshold is reached, the power tool reduces a duty cycle of a pulse-width-modulated (PWM) signal used to control the motor. By reducing the duty cycle, the motor current is reduced, allowing the voltage to rise back a level that permits reliable operation and allowing the power tool to complete its operation. In some situations, the tool recovers functionality and returns to a normal loading level. When this occurs, the PWM value restriction is released, and the PWM rises back to follow the user request. In other situations, the voltage of the system continues to drop below a second voltage threshold less than the first voltage threshold. When the second voltage threshold is met, the power tool shuts down.

Power tools described herein include a motor, a power source, a voltage sensor, and a controller electrically connected to the motor and the voltage sensor. The power source is configured to selectively provide power to the motor. The voltage sensor is configured to sense a voltage of the power source. The controller is configured to monitor, with the voltage sensor, the voltage of the power source, and reduce, when the voltage of the power source is less than or equal to a first threshold value, a current provided from the power source to the motor. The controller is configured to stop, when the voltage of the power source is less than or equal to a second threshold value, providing the current from the power source to the motor.

Methods described herein for performing a protective operation include monitoring, with a voltage sensor, a voltage of a power source, reducing, when the voltage of the power source is less than or equal to a first threshold value, a current provided from the power source to a motor, and stopping, when the voltage of the power source is less than or equal to a second threshold value, providing the current from the power source to the motor.

Power tools described herein include a motor, a power source, a voltage sensor, and a controller electrically connected to the motor and the voltage sensor. The power source is configured to selectively provide power to the motor. The voltage sensor is configured to sense a voltage of the power source. The controller is configured to monitor the voltage of the power source, compare the voltage of the power source to a first voltage threshold, and drive, in response to the voltage of the power source being less than or equal to the first voltage threshold, the motor according to a reduced-current operating mode. The controller is further configured to compare, while in the reduced-current operating mode, the voltage of the power source to a second voltage threshold, and stop, in response to the voltage of the power source being less than or equal to the second voltage threshold, providing current from the power source to the motor.

Before any embodiments are explained in detail, it is to be understood that the embodiments are not limited in their application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiments, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers" and "computing devices" described in the specification can include one or more processing units, one or more computer-readable medium modules, one or more input/output interfaces, and various connections (e.g., a system bus) connecting the components.

Other features and aspects will become apparent by consideration of the following detailed description and accompanying drawings.

### BRIEF DESCRIPTION OF THE DRAWINGS

FIG. 1 illustrates a power tool, in accordance with embodiments described herein.
FIG. 2 illustrates the power tool of FIG. 1 with portions removed, in accordance with embodiments described herein.
FIG. 3 illustrates a block diagram of a controller, in accordance with embodiments described herein.
FIG. 4 illustrates a flow chart of a method performed by the controller of FIG. 3, in accordance with embodiments described herein.
FIG. 5 illustrates a diagram of a monitored voltage and a corresponding duty cycle control, in accordance with embodiments described herein.
FIG. 6 illustrates a flow chart of another method performed by the controller of FIG. 3, in accordance with embodiments described herein.
FIG. 7 illustrates another diagram of a monitored voltage and a corresponding duty cycle control, in accordance with embodiments described herein.

### DETAILED DESCRIPTION

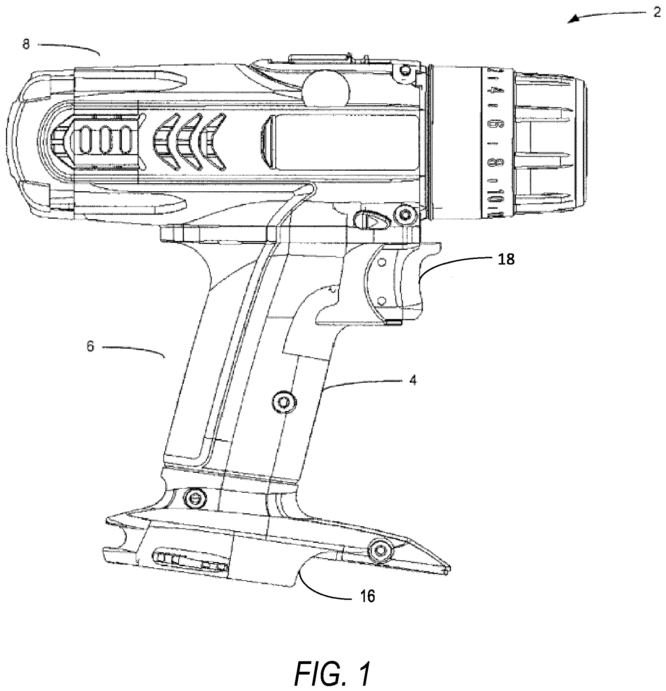

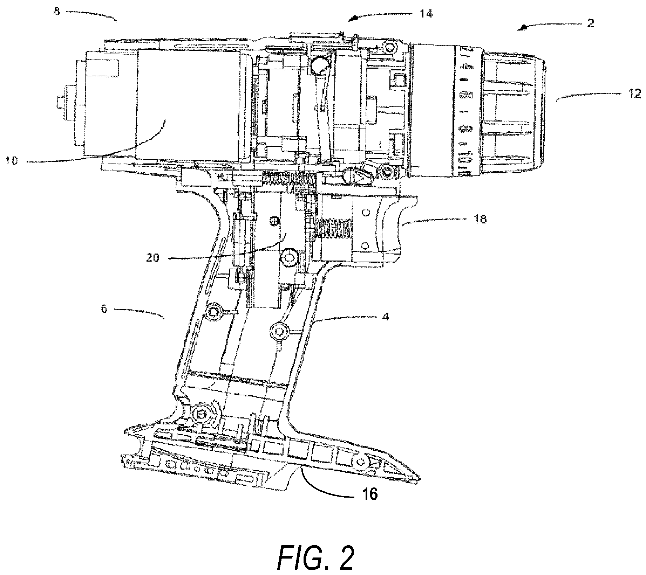

FIG. 1 illustrates an example power tool 2. The power tool 2 may be powered from an external power source via a power cord, or may be powered by a battery pack (not shown) connected to a battery pack interface 16. The power tool 2 includes a power tool housing 4, which includes a handle portion 6 and a drive portion 8. As shown in FIG. 2, the drive portion 8 includes a motor 10, an output 12, and a drive train 14 located intermediate the motor 10 and the output 12. The drive train 14 may include a variable speed transmission to mechanically change the speed of the output 12. The power tool 2 also includes a trigger 18 and a motor switch 20 for selectively activating the motor 10 to supply power to the drive train 14.

While FIG. 1 illustrates a specific power tool 2 with a rotational output, it is contemplated that protective operations described herein may be used with multiple types of power tools, such as drills, drivers, powered screw drivers, powered ratchets, grinders, right angle drills, rotary hammers, and/or another type of power tool that experiences rotation about an axis. In some embodiments, the power tool 2 is a power tool that experiences translational movement, such as reciprocal saws, chainsaws, pole-saws, circular saws, cut-off saws, and/or table saws.

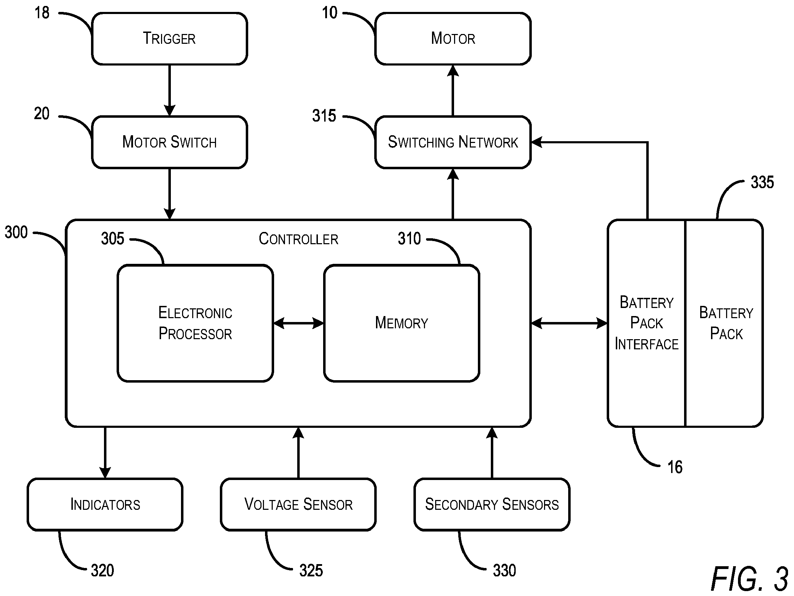

A controller 300 for the power tool 2 is illustrated in FIG. 3, according to some embodiments. The controller 300 is electrically and/or communicatively connected to a variety of modules or components of the power tool 2. For example, the illustrated controller 300 is connected to indicators 320, a voltage sensor 325, one or more secondary sensors 330, a battery pack 335 (via the battery pack interface 16), the motor 10 (via a switching network 315), and the trigger 18 (via the motor switch 20).

The controller 300 includes a plurality of electrical and electronic components that provide power, operational, control, and protection to the components and modules within the controller 300 and/or the power tool 2. For example, the controller 300 includes, among other things, an electronic processor 305 (e.g., a microprocessor, a processing unit, an electronic controller, a microcontroller, or another suitable programmable device) and a memory 310. The electronic processor 305 and the memory 310, as well as the various modules connected to the controller 300, are connected by one or more control and/or data buses. The control and/or data buses are shown generally in FIG. 3 for illustrative purposes. The use of one or more control and/or data buses for the interconnection between and communication among the various modules and components would be known to a person skilled in the art in view of the embodiments described herein.

The memory 310 is a non-transitory computer readable medium and includes, for example, a program storage area and a data storage area. The program storage area and the data storage area can include combinations of different types of memory, such as a ROM, a RAM (e.g., DRAM, SDRAM, etc.) EEPROM, flash memory, a hard disk, an SD card, or other suitable magnetic, optical, physical, or electronic memory devices. The electronic processor 305 is connected to the memory 310 and executes software instructions that are capable of being stored in a RAM of the memory 310 (e.g., during execution), a ROM of the memory 310 (e.g., on a generally permanent basis), or another non-transitory computer readable medium such as another memory or a disc. Software included in the implementation of the power tool 2 can be stored in the memory 310 of the controller 300. The software includes, for example, firmware, one or more applications, program data, filters, rules, one or more program modules, and other executable instructions. The controller 300 is configured to retrieve from the memory 310 and execute, among other things, instructions related to the controller processes and methods described herein. In other embodiments, the controller 300 includes additional, fewer, or different components.

The controller 300 drives (e.g., provides one or more driving signals to) the motor 10 to drive the output 12 in response to a user's actuation of the trigger 18. Depression of the trigger 18 actuates a motor switch 20, which outputs a signal to the controller 300 to drive the motor 10, and therefore the output 12. In some embodiments, the controller 300 controls the switching network 315 (e.g., a FET switching bridge) to drive the motor 10. For example, the switching network 315 includes a plurality of high-side switching elements (e.g., FETs) and a plurality of low-side switching elements. The controller 300 may control each FET of the plurality of high-side switching elements and the plurality of low-side switching elements to drive each phase of the motor 10. For example, the switching network 315 may be controlled to more quickly deaccelerate the motor 10. A duty cycle of the control signal used to control the plurality of high-side switching elements and the plurality of low-side switching elements may be adjusted by the controller 300 to adjust the current provided to the motor 10. In some embodiments, the controller 300 monitors a rotation of the motor 10 (e.g., a rotational rate of the motor 10, a velocity of the motor 10, a position of the motor 10, and the like) via a speed sensor included in the secondary sensors 330.

The indicators 320 may also be connected to the controller 300 and receive control signals from the controller 300 to turn on and off or otherwise convey information based on different states of the power tool 2. The indicators 320 include, for example, one or more light-emitting diodes (LEDs), or a display screen. The indicators 320 can be configured to display conditions of, or information associated with, the power tool 2. For example, the indicators 320 may display information associated with a fault condition of the power tool 2. In addition to or in place of visual indicators, the indicators 320 may also include a speaker and/or a tactile feedback mechanism to convey information to a user through audible or tactile outputs. In some embodiments, the indicators 320 indicate when a protective operation is occurring, such as a reduction in duty cycle of a PWM control signal.

The battery pack interface 16 is connected to the controller 300 and is configured to couple with a battery pack 335. The battery pack interface 16 includes a combination of mechanical (e.g., a battery pack receiving portion) and electrical components configured to and operable for interfacing (e.g., mechanically, electrically, and communicatively connecting) the power tool 2 with the battery pack 335. In some embodiments, a power input unit is situated between the battery pack interface 16 and the controller 300. The power input unit may include active and/or passive components (e.g., voltage step-down controllers, voltage converters, rectifiers, filters, etc.) to regulate or control the power received through the battery pack interface 16 and to the controller 300. In some embodiments, the battery pack interface 16 is also coupled to the switching network 315. The operation of the switching network 315, as controlled by the controller 300, determines how power is supplied to the motor 10.

The voltage sensor 325 senses a voltage provided by the battery pack 335, a voltage of the motor 10 (e.g., a phase voltage of each phase, a collective phase voltage, etc.), or a combination thereof. The controller 300 monitors voltage signals (e.g., signals indicative of the sensed voltage) and controls operation of the motor 10 based on the voltage signals.

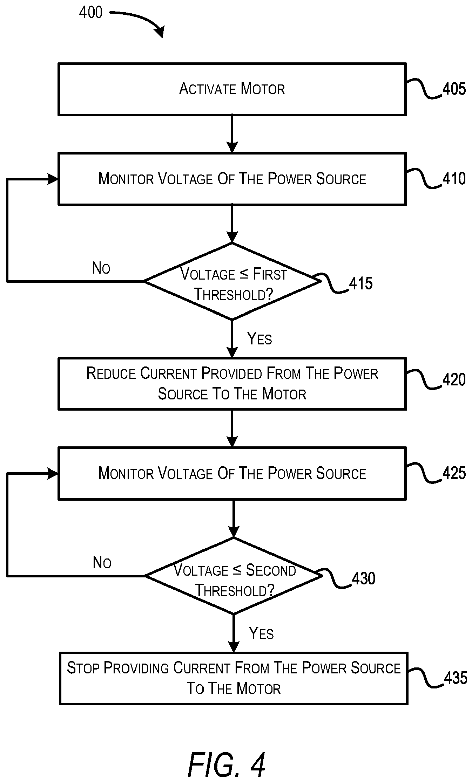

In some instances during operation of the power tool 2, the power tool 2 may experience a high load condition. High load conditions may result in an increase in current draw from the battery pack 335, causing the voltage of the battery pack 335 to decrease. This over current condition may result in permanent damage of the battery pack 335. FIG. 4 provides a method 400 for performing protective operations based on the voltage of the battery pack 335, according to some embodiments. The method 400 may be performed by the controller 300 (using the electronic processor 305). It should be understood that the order of the steps disclosed in method 400 could vary. Although illustrated as occurring in parallel order, in other embodiments, the steps disclosed may be performed in serial order. Furthermore, additional steps may be added to the method and not all of the steps may be required.

At block 405, the controller 300 activates the motor 10. For example, the controller 300 controls the switching network 315 to provide power to the motor 10 in response to determining that the trigger 18 has been actuated. In some embodiments, the controller 300 provides a PWM signal having a first duty cycle to the FETs of the switching network 315 to drive the motor 10 (e.g., operates in a normal-current operating mode).

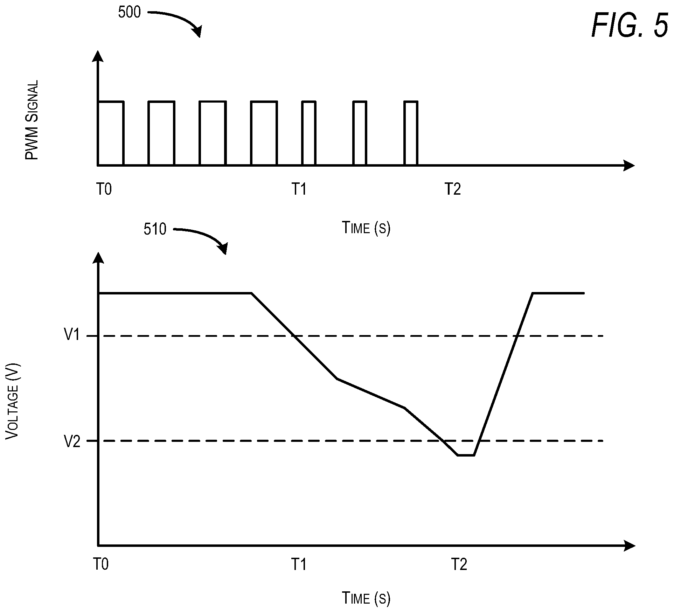

As one example, FIG. 5 provides an example PWM graph 500 and a corresponding voltage graph 510. The voltage graph 510 illustrates the monitored voltage of the battery pack 335 over a period of time. The PWM graph 500 illustrates a corresponding PWM signal used to drive the motor 10 over the same period of time. As seen between T0 and T1, the voltage of the battery pack 335 is above a first voltage threshold V1. During this same time period, the PWM signal has a first duty cycle (such as, for example, 50%).

Returning to FIG. 4, at block 410, the controller 300 monitors a voltage of the power source (e.g., the battery pack 335). For example, the controller 300 receives voltage signals from the voltage sensor 325 indicative of a voltage of the battery pack 335. While indicated as a block within the method 400, the controller 300 may continuously monitor the voltage of the power source during operation of the power tool 2 (e.g., at all points within the method 400). At block 415, the controller 300 determines whether the voltage of the power source is less than or equal to a first voltage threshold. For example, the controller 300 compares the voltage of the battery pack 335 to the first voltage threshold. When the voltage of the battery pack 335 is greater than the first voltage threshold, the controller 300 returns to block 410 and continues to monitor the voltage of the battery pack 335. When the voltage of the battery pack 335 is less than or equal to the first voltage threshold, the controller 300 proceeds to block 420.

At block 420, the controller 300 reduces the current provided from the power source to the motor 10. In some embodiments, the controller 300 reduces the duty cycle of the PWM signal used to control the switching network 315 (e.g., operates within a reduced-current operating mode). By reducing the duty cycle of the PWM signal used to control the switching network 315, the controller 300 reduces the torque of the motor 10. By decreasing the torque of the motor 10, the controller 300 reduces the current provided from the battery pack 335, protecting the battery pack 335 from high current conditions. For example, with reference to FIG. 5, the voltage of the battery pack 335 decreases below the first voltage threshold V1 at time T1. In response, at time T1, the controller 300 reduces the duty cycle of the PWM signal. As shown in the PWM graph 500, the controller 300 may reduce the duty cycle of the PWM signal from 50% to 25%.

Returning to FIG. 4, at block 425, the controller 300 continues to monitor the voltage of the power source (e.g., the battery pack 335). At block 430, the controller 300 determines whether the voltage of the power source is less than or equal to a second voltage threshold. For example, the controller 300 compares the voltage of the battery pack 335 to a second voltage threshold. When the voltage of the battery pack 335 is greater than the second voltage threshold and still below the first voltage threshold, the controller 300 returns to block 425 and continues to monitor the voltage of the power source (while still operating the motor 10 at a reduced current). For example, with reference to FIG. 5, the voltage of the battery pack 335 stays between the first voltage threshold V1 and the second voltage threshold V2 during the time period between T1 and T2. During the time period between T1 and T2, the controller 300 maintains the duty cycle of the PWM signal at the reduced duty cycle.

When the voltage of the battery pack 335 is less than or equal to the second voltage threshold, the controller 300 proceeds to block 435. At block 435, the controller 300 stops providing current from the power source to the motor 10. In some embodiments, the controller 300 reduces the duty cycle of the PWM signal used to control the switching network 315 to 0%, allowing the motor 10 to coast to a stop. In other embodiments, the controller 300 controls the switching network 315 to brake the motor 10 to a stop.

In the example of FIG. 5, at time T2, the voltage of the battery pack 335 decreases below the second voltage threshold V2. In response, the controller 300 sets the duty cycle of the PWM signal to 0%. This allows the voltage of the battery pack 335 to recover, returning to a nominal value. In some instances, the controller 300 locks operation of the power tool 2 until the voltage of the battery pack 335 returns above the second voltage threshold. In other instances, the controller 300 locks operation of the power tool 2 until the voltage of the battery pack 335 returns above the first voltage threshold. Rather than being based solely on the voltage of the battery pack 335, when the voltage of the battery pack 335 decreases below the second voltage threshold V2, the controller 300 may lock operation of the power tool 2 for a predetermined time period.

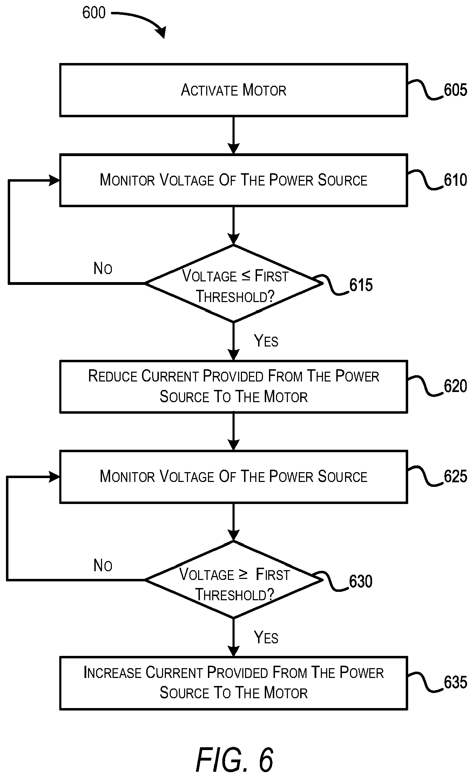

In some instances, the voltage of the battery pack 335 may recover while operating the motor 10 with reduced current. FIG. 6 provides a method 600 for performing protective operations based on the voltage of the battery pack 335, according to some embodiments. The method 600 may be performed by the controller 300 (using the electronic processor 305). It should be understood that the order of the steps disclosed in method 600 could vary. Although illustrated as occurring in parallel order, in other embodiments, the steps disclosed may be performed in serial order. Furthermore, additional steps may be added to the method and not all of the steps may be required. For example, steps included in the method 400 may be implemented concurrently or in place of steps within the method 600.

At block 605, the controller 300 activates the motor 10. For example, the controller 300 controls the switching network 315 to provide power to the motor 10 in response to determining that the trigger 18 has been actuated. In some embodiments, the controller 300 provides a PWM signal having a first duty cycle to the FETs of the switching network 315 to drive the motor 10.

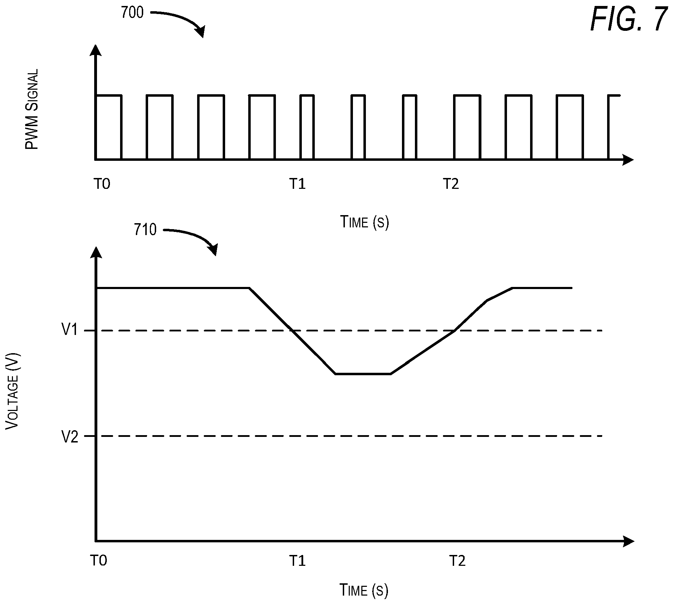

As one example, FIG. 7 provides an example PWM graph 700 and a corresponding voltage graph 710. The voltage graph 710 illustrates the monitored voltage of the battery pack 335 over a period of time. The PWM graph 700 illustrates a corresponding PWM signal used to drive the motor 10 over the same period of time. As seen between T0 and T1, the voltage of the battery pack 335 is above a first voltage threshold V1. During this same time period, the PWM signal has a first duty cycle (such as, for example, 50%).

Returning to FIG. 6, at block 610, the controller 300 monitors a voltage of the power source (e.g., the battery pack 335). For example, the controller 300 receives voltage signals from the voltage sensor 325 indicative of a voltage of the battery pack 335. While indicated as a block within the method 600, the controller 300 may continuously monitor the voltage of the power source during operation of the power tool 2 (e.g., at all points within the method 600). At block 615, the controller 300 determines whether the voltage of the power source is less than or equal to a first voltage threshold. For example, the controller 300 compares the voltage of the battery pack 335 to the first voltage threshold. When the voltage of the battery pack 335 is greater than the first voltage threshold, the controller 300 returns to block 610 and continues to monitor the voltage of the battery pack 335. When the voltage of the battery pack 335 is less than or equal to the first voltage threshold, the controller 300 proceeds to block 620.

At block 620, the controller 300 reduces the current provided from the power source to the motor 10. In some embodiments, the controller 300 reduces the duty cycle of the PWM signal used to control the switching network 315. For example, with reference to FIG. 7, the voltage of the battery pack 335 decreases below the first voltage threshold V1 at time T1. In response, at time T1, the controller 300 reduces the duty cycle of the PWM signal. As shown in the PWM graph 700, the controller 300 may reduce the duty cycle of the PWM signal from 50% to 25%.

Returning to FIG. 6, at block 625, the controller 300 continues to monitor the voltage of the power source (e.g., the battery pack 335). At block 630, the controller 300 determines whether the voltage of the power source has increased above or equal to the first voltage threshold. For example, the controller 300 compares the voltage of the battery pack 335 to the first voltage threshold while controlling the motor 10 with reduced current. When the voltage of the battery pack 335 remains less than the first voltage threshold, the controller 300 returns to block 625 and continues to monitor the voltage of the power source (while still controlling the motor 10 with a reduced current). For example, with reference to FIG. 7, the voltage of the battery pack 335 stay between the first voltage threshold V1 and the second voltage threshold V2 during the time period between T1 and T2. During the time period between T1 and T2, the controller 300 maintains the duty cycle of the PWM signal at the reduced duty cycle.

When the voltage of the battery pack 335 increases to be greater than or equal to the first voltage threshold, the controller 300 proceeds to block 635. At block 635, the controller 300 increases the current provided from the power source to the motor 10. In some embodiments, the controller 300 increases the duty cycle of the PWM signal used to control the switching network 315. Increasing the duty cycle of the PWM signal increases the speed of the motor 10, and therefore increases the torque. This increase in torque raises the current provided by the battery pack 335. For example, with reference to FIG. 7, the voltage of the battery pack 335 increases above the first voltage threshold V1 at time T2. In response, at time T2, the controller 300 increases the duty cycle of the PWM signal. As shown in the PWM graph 700, the controller 300 may increase the duty cycle of the PWM signal to the initial duty cycle (e.g., from 25% to 50%).

In some implementations, the controller 300 controls the duty cycle of the PWM signal used to control the switching network 315 based on an amount of actuation of the trigger 18. For example, when the trigger 18 is fully actuated (e.g., actuated to a first position), the PWM signal used to control the switching network 315 may have a high duty cycle (e.g., greater than 75%). When the trigger 18 is partially actuated (e.g., actuated to a second position), the PWM signal used to control the switching network 315 has a lower duty cycle relative to when the trigger 18 is fully actuated (e.g., between 25% and 75%). When the voltage of the battery pack 335 reduces below the first voltage threshold (e.g., at blocks 415 and 615), the controller 300 may set a limit on the duty cycle of the PWM signal used to control the switching network 315. For example, when the voltage of the battery pack 335 reduces below the first voltage threshold, the controller 300 may limit the duty cycle to a maximum of 50%.

While embodiments described herein have primarily referred to monitoring voltage of the battery pack 335 (at blocks 410 and 610), in some instances, the controller 300 instead monitors a voltage of the motor 10 (e.g., a phase voltage), a total system voltage, a battery voltage experienced by the motor 10, or the like. The controller 300 then controls the current provided to the motor 10 (at blocks 420, 435, 620, 635) based on the voltage of the motor 10, the total system voltage, of a combination thereof with the voltage of the battery pack 335.

Thus, embodiments provided herein describe, among other things, systems and methods for under-voltage protective features in power tools. Various features and advantages are set forth in the following claims.

## Claims

1. A power tool comprising:
a motor;
a power source configured to selectively provide power to the motor;
a voltage sensor configured to sense a voltage of the power source; and
a controller electrically connected to the motor and the voltage sensor, the controller configured to:
monitor, preferably with the voltage sensor, the voltage of the power source, reduce, when the voltage of the power source is less than or equal to a first threshold value, a current provided from the power source to the motor, and
stop, when the voltage of the power source is less than or equal to a second threshold value, providing the current from the power source to the motor.

2. The power tool of claim 1, wherein the second threshold value is less than the first threshold value.

3. The power tool of either claim 1 or claim 2, further comprising:
a switching network coupled between the power source and the motor,
wherein the controller is further configured to:
provide power to the motor by controlling a duty cycle of the switching network, and
reduce the duty cycle of the switching network to reduce the current provided from the power source to the motor, wherein the switching network preferably includes a plurality of high-side switching elements and a plurality of low-side switching elements.

4. The power tool of any of claims 1 to 3, wherein the controller is further configured to:
increase, when the voltage of the power source increases above the first threshold value, the current provided from the power source to the motor, further preferably comprising:
a switching network coupled between the power source and the motor,
wherein the controller is further configured to:
provide power to the motor by controlling a duty cycle of the switching network, and
increase the duty cycle of the switching network to increase the current provided from the power source to the motor.

5. The power tool of any one of the previous claims, wherein the controller is further configured to:
lock, when the voltage of the power source is less than or equal to the second threshold value, operation of the power tool for a predetermined time period.

6. A method for performing a protective operation, the method comprising:
monitoring, with a voltage sensor, a voltage of a power source,
reducing, when the voltage of the power source is less than or equal to a first threshold value, a current provided from the power source to a motor, and
stopping, when the voltage of the power source is less than or equal to a second threshold value, providing the current from the power source to the motor.

7. The method of claim 6, wherein the second threshold value is less than the first threshold value.

8. The method of either claim 6 or claim 7, further comprising:
providing power to the motor by controlling a duty cycle of a switching network, and
reducing the duty cycle of the switching network to reduce the current provided from the power source to the motor, the method further preferably comprising:
limiting, when the voltage of the power source is less than or equal to the first threshold value, a maximum value of the duty cycle of the switching network.

9. The method of any one of claims 6 to 8, further comprising:
increasing, when the voltage of the power source increases above the first threshold value, the current provided from the power source to the motor, the method further preferably comprising:
providing power to the motor by controlling a duty cycle of a switching network, and
increasing the duty cycle of the switching network to increase the current provided from the power source to the motor.

10. The method of any one of claims 6 to 9, further comprising:
locking, when the voltage of the power source is less than or equal to the second threshold value, operation of the motor for a predetermined time period.

11. A power tool comprising:
a motor;
a power source configured to selectively provide power to the motor;
a voltage sensor configured to sense a voltage of the power source; and
a controller electrically connected to the motor and the voltage sensor, the controller configured to:
monitor the voltage of the power source,
compare the voltage of the power source to a first voltage threshold, drive, in response to the voltage of the power source being less than or equal to the first voltage threshold, the motor according to a reduced-current operating mode,
compare, while in the reduced-current operating mode, the voltage of the power source to a second voltage threshold, and
stop, in response to the voltage of the power source being less than or equal to the second voltage threshold, providing current from the power source to the motor.

12. The power tool of claim 11, wherein the second voltage threshold is less than the first voltage threshold.

13. The power tool of either claim 11 or claim 12, further comprising:
a switching network coupled between the power source and the motor,
wherein the controller is further configured to:
provide power to the motor by controlling a duty cycle of the switching network, and
reduce, while in the reduced-current operating mode, the duty cycle of the switching network.

14. The power tool of any one of claims 11 to 13, wherein the controller is further configured to:
drive, when the voltage of the power source increases above the first voltage threshold, the motor according to a normal-current operating mode, further preferably comprising:
a switching network coupled between the power source and the motor,
wherein the controller is further configured to:
provide power to the motor by controlling a duty cycle of the switching network, and
return, while in the normal-current operating mode, the duty cycle of the switching network to an initial value.

15. The power tool of any one of claims 11 to 14, wherein the controller is further configured to:
lock, in response to the voltage of the power source being less than or equal to the second voltage threshold, operation of the power tool for a predetermined time period.
